# EUROPEAN PATENT SPECIFICATION

(11) **EP 1 453 983 B1**
(45) Date of publication and mention of the grant of the patent: **18.01.2006**
(21) Application number: 02787910.5
(22) Date of filing: 05.12.2002
(51) Int. Cl.: C21B 7/20

(54) **CHARGING DEVICE WITH ROTARY CHUTE**
LADEGERÄT MIT DREHBARER VERTEILERSCHURRE
DISPOSITIF DE CHARGEMENT POURVU D'UNE GOULOTTE ROTATIVE

(30) Priority: 13.12.2001 LU 90863
(43) Date of publication of application: 08.09.2004
(73) Proprietor: PAUL WURTH S.A., 1122 Luxembourg (LU)
(72) Inventor: GORZA, Robert, L-7374 BOFFERDANGE (LU); THILLEN, Guy, L-9234 DIEKIRCH (LU)
(74) Representative: Schmitt, Armand
(86) International application number: PCT/EP2002/013762
(87) International publication number: WO 2003/050314

(56) References cited:
- US-A- 5 799 777
- US-A- 5 965 085
- DATABASE WPI Section Ch, Week 198328 Derwent Publications Ltd., London, GB; Class M24, AN 1983-709548 XP002210890 & SU 954 422 A (DNEPR METAL INST), 30 August 1982 (1982-08-30)
- PATENT ABSTRACTS OF JAPAN vol. 014, no. 188 (C-0710), 17 April 1990 (1990-04-17) & JP 02 034710 A (NIPPON STEEL CORP), 5 February 1990 (1990-02-05)
- PATENT ABSTRACTS OF JAPAN vol. 014, no. 188 (C-0710), 17 April 1990 (1990-04-17) & JP 02 034711 A (NIPPON STEEL CORP), 5 February 1990 (1990-02-05)
- DATABASE WPI Section Ch, Week 198047 Derwent Publications Ltd., London, GB; Class M24, AN 1980-84060C XP002210891 & SU 727 690 A (DNEPR METAL INST), 15 April 1980 (1980-04-15)
- DATABASE WPI Section Ch, Week 198122 Derwent Publications Ltd., London, GB; Class M24, AN 1981-39766D XP002210892 & SU 763 472 A (DNEPR METAL WKS), 15 September 1980 (1980-09-15)
- DATABASE WPI Section Ch, Week 198204 Derwent Publications Ltd., London, GB; Class M24, AN 1982-07549E XP002210893 & SU 821 492 A (W SIBE METALLURG WK), 18 April 1981 (1981-04-18)

## Description

### Field of the invention

The present invention relates to a charging device with a rotary chute.

### Background of the invention

Charging devices with rotary chutes are inter alia used in shaft furnaces (such as e.g. modem blast furnaces) for providing a more or less uniform distribution of bulk material onto a charging surface inside the fumace. The chute defines for the charging material a chute channel with a concavely curved sliding surface. It is suspended in a cantilever manner from a rotor having a substantially vertical axis of rotation and can be pivoted on this rotor about a substantially horizontal suspension axis to change the inclination of the chute channel. By rotating the rotor about its vertical axis of rotation and simultaneously varying the inclination of the chute by means of a rotating pivoting mechanism, it is consequently possible to distribute the bulk material along a substantially spiral path onto a charging surface in the furnace.

Charging devices with rotary-pivoting chutes are for example described in WO 95/21272, US-A-5,022,806, US-A-4,941,792, US-A-4,368,813, US-A-3,814,403 and US-A-3,766,868. In these prior art devices, the rotating pivoting mechanism comprises an auxiliary rotor, which has an axis of rotation substantially coaxial with the main rotor supporting the chute. While the main rotor rotates the chute about a vertical axis, the auxiliary rotor interacts with the rotating chute so as to pivot it about a horizontal suspension axis, thereby varying the inclination of the chute. For this purpose, the auxiliary rotor is connected to the chute by a mechanism converting e.g. a variation in angular displacement between the two rotors into a variation in the angle of inclination of the chute.

It will be appreciated that in prior art charging devices with rotary-pivoting chutes, the pivoting mechanism used to vary the inclination of the chute channel has to transmit important pivoting moments onto the rotary chute. Indeed, the chute may have a cantilever length several meters, and due to heavy wear and heat protection, it is generally a very heavy construction. It follows that the pivoting mechanism of the rotary chute must be conceived to transmit important pivoting moments onto the rotating chute, which creates a lot of technical problems and makes the charging device rather expensive.

SU-954422 A discloses a charging device with a rotor rotated about a vertical axis of rotation and a chute supported by the rotor. This chute consists of half of a hollow cylinder with a support journal at its top end that is coaxial to the axis of the cylinder. This support journal is connected to an oscillation mechanism on rotor, so that the latter is capable of oscillating the chute about the axis of the cylinder. The bottom end of the chute is cut along a helical line, with half of the pitch equal to 35-50% of the furnace top diameter, leaving a pointed edge end. It will be noted that the chute disclosed in this document is a very cumbersome device that is not really suited for distributing bulk material along a substantially spiral path onto a surface.

### Object of the invention

A technical problem underlying the present invention is to provide a charging device capable of distributing bulk material along a substantially spiral path onto a surface, without having to transmit important pivoting moments onto a rotary chute.

This problem is solved by a charging device as claimed in claim 1.

### Summary of the invention

A charging device for bulk material in accordance with the present invention comprises a rotor supported by a support structure so as to have a substantially vertical axis of rotation, a first drive for rotating the rotor about its substantially vertical axis of rotation and a chute supported by the rotor so as to be rotated with latter. This chute has a top end and a bottom end and defines for the bulk material a channel with a concavely curved sliding surface sloping downwards from the top end to the bottom end of the chute. In accordance with the present invention, the chute is supported by the rotor so as to be rotatable about its longitudinal axis, and its concavely curved sliding surface has a width that diminishes from the top end to the bottom end of the chute. By simply rotating this chute about its longitudinal axis, it is possible to vary the location where bulk material sliding down the chute channel leaves the latter. By rotating the rotor about its axis of rotation and simultaneously varying the angular orientation of the narrowing sliding surface by rotating the chute about its longitudinal axis, it is consequently possible to distribute bulk material along a substantially spiral path onto a surface. It will be appreciated that-in contrast to pivoting a cantilever chute about a horizontal axis of suspension-rotating a cantilever chute about its longitudinal axis does not require the transmission of important moments onto the chute, as the vertical position of the centre of gravity of a chute that is rotated about its longitudinal axis is not (or at least not substantially) changed.

The chute is rotatable about its longitudinal axis between a first angular end position and a second angular end position, wherein the amplitude of rotation of the chute between its two end positions is preferably less than 180° and more preferably about 90°. It will be appreciated that-due to a small amplitude of rotation-it is possible to have a relatively simple drive for rotating the chute about its longitudinal axis.

A front end edge delimits the sliding surface at the bottom end of the chute, and a first lateral edge delimits the sliding surface along one side from the bottom end to the top end of the chute. This first lateral edge is designed so that:
if the chute is in its first angular end position, then bulk material sliding down the chute channel leaves the latter over the front end edge; and
if the chute is in its second angular end position, then bulk material sliding down the chute channel leaves the latter over the lateral edge, near the top end of the chute.

The concavely curved sliding surface is a substantially cylindrical surface. This allows to warrant that bulk material sliding down the chute channel always encounters substantially the same sliding conditions in the chute channel, independently of the angular orientation of the sliding surface.

It will be further appreciated that a simple an efficient solution for support ing the chute on the rotor is provided too. In accordance with this solution, the rotor comprises a rotatable support ring with an axis of rotation that defines an acute angle (α) with the vertical axis of rotation of the rotor. The chute has a tubular top end that is axially inserted into the rotatable support ring and secured to the latter, wherein the longitudinal axis of the chute is substantially coaxial with the axis of rotation of the rotatable support ring. In this embodiment, complementary bayonet connection means are advantageously associated with the tubular top end and the rotatable support ring for axially supporting the tubular top end of the chute in the rotatable support ring. It will be appreciated that this bayonet type connection allows easy mounting and dismounting of the chute.

The charging device normally includes an hydraulic or electric second drive for rotating the chute about its longitudinal axis. This second drive is preferably mounted on the rotor and may be a rotary or linear drive. In a first embodiment with an hydraulic drive, the charging device comprises a rotating hydraulic connection for connecting the hydraulic drive on the rotor to a stationary hydraulic circuit on the support structure. In a second embodiment with an hydraulic drive, hydraulic power generating equipment is located on the rotor itself. In accordance with this solution, the charging device comprises an hydraulic pump with a pinion drive arranged on the rotor and a tooth ring fixed to the support structure. The pinion drive engages with the tooth ring and is driven by the latter when the rotor is rotated about its vertical axis of rotation. In a first embodiment with an electric drive, the charging device comprises slip ring contacts for connecting the electric drive to a stationary electric circuit. In a second embodiment with an electric drive, electric power generating equipment is located on the rotor itself. In accordance with this solution, the charging device comprises an electric generator with a pinion drive arranged on the rotor and a tooth ring fixed to the support structure. The pinion drive engages with the tooth ring and is driven by the latter when the rotor is rotated about its vertical axis of rotation. It has to be pointed out that the second drive could also be mounted on the support structure. In this case, the charging device includes e.g. an auxiliary rotor, which is driven by the second drive about a substantially vertical axis of rotation, and a mechanism connected between the auxiliary rotor and the chute, so that an angular shift between the auxiliary rotor and the rotor supporting the chute is transformed in a rotation of the chute about its longitudinal axis.

To convey bulk material onto the rotary chute, the rotor advantageously includes a vertical material feed tube in rotation with the rotor. This material feed tube has a top end for receiving the bulk material and a bottom end engaging the tubular top end of the chute for conducting the bulk material onto the concavely curved sliding surface on the top end of the chute. It will be noted that this solution allows to convey the bulk material through an entirely closed channel onto the chute. In this embodiment the support structure advantageously forms a housing including a top end with an top opening therein and a bottom end with a bottom opening therein. The vertical material feed tube is then located axially below the top opening in the housing, and the rotor forms a kind of rotating shield closing the bottom opening of the housing with the exception of a small annular gap between the rotor and the housing.

### Brief description of the drawings

The present invention will now be described, by way of example, with reference to the accompanying drawings, in which:
- FIG. 1:: is a schematic vertical section of a charging device in accordance with the present invention;
- FIG. 2-4:: are sections of a top end of a shaft furnace equipped with a charging device in accordance with the present invention, which illustrate the operation of the charging device;
- FIG. 5:: is a three dimensional view of a chute for a charging device in accordance with the present invention; and
- FIG. 6-7:: are sections of a top of a shaft furnace equipped with a charging device in accordance with the present invention, which illustrate a replacement of the chute.

### Detailed description of a preferred embodiment

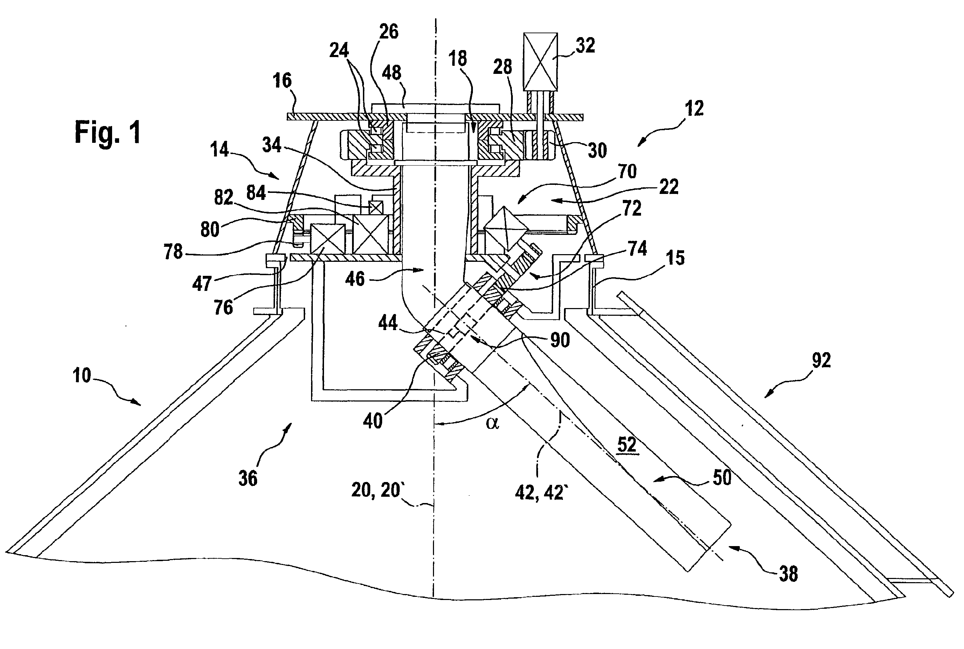

In FIG. 1, reference number 10 identifies a shaft furnace, as e.g. a blast furnace, that is equipped with a charging device 12 in accordance with the present invention. This charging device 12 comprises a support structure conceived as a housing 14, which is connected with its open bottom end to a top flange 15 of the shaft furnace 10. At its top end, the housing 14 is closed by a top plate 16 with an opening 18 centred on the vertical central axis 20 of the shaft furnace 10.

Reference number 22 globally identifies a rotor. The latter is supported inside the housing 14 by means of big diameter roller bearings 24. The latter are connected between the top end of the rotor 22 and a support flange 26 of the top plate 16, so that the rotor 22 has an axis of rotation 20' that is substantially coaxial to the vertical central axis 20 of the shaft furnace 10. The top end of the rotor 22 is furthermore equipped with a gear ring 28. A pinion 30 of a motor 32, which is mounted outside of the housing 14 on the top plate 16, engages this gear ring 28 for rotating the rotor 22 about its vertical axis of rotation 20'. A tubular body 34 extends the rotor 22 downwards, where its bottom end forms a support platform 36 for a chute 38.

To support the chute 38, the support platform 36 of the rotor 22 comprises a rotatable support ring 40, which has an axis of rotation 42 that defines an acute angle (α) with the vertical axis of rotation 20 of the rotor 22. A tubular top end 44 of the chute 38 is axially inserted into the rotatable support ring 40 and secured thereto, so that the axis of rotation 42 of the rotatable support ring 40 is substantially coaxial with the longitudinal axis 42' of the chute 38, which passes through the centre of gravity of the chute 38. In summary, the chute 38 is supported by the rotor 22 so as to be rotatable about its longitudinal axis 40' without substantially changing the vertical position of the centre of gravity of the chute 38.

Reference number 46 identifies a vertical material feed tube. This material feed tube 46 is fixed to the rotor 22, so that it is in rotation with the latter. It includes an open top end arranged under the opening 18 in the top plate 16 and a bottom end engaging the tubular top end 44 of the chute 38. A stationary inlet funnel 48 is fixed onto the top plate 16 for charging the bulk material into the rotating material feed tube 46. It will further be noted that the support platform 36 of the rotor 22 is conceived as a kind of rotating annular shield surrounding the rotatable support ring 40 and closing the bottom opening of the housing 14 with the exception of a small annular gap 47 between the rotor 22 and the housing 14. This annular gap 47 allows to rotate the rotor 22 in the housing 14, but can be easily sealed off by adequate sealing means (not shown). Adequate sealing means (not shown) can also be provided between the bottom end of the material feed tube 46 and the tubular top end 44 of the chute 38, and between the stationary inlet funnel 48 and the top end of the material feed tube 46. It will therefore be appreciated that it is easily possible to obtain a very good protection of equipment inside the housing 14 against penetration of hot and corrosive gases from the furnace 10.

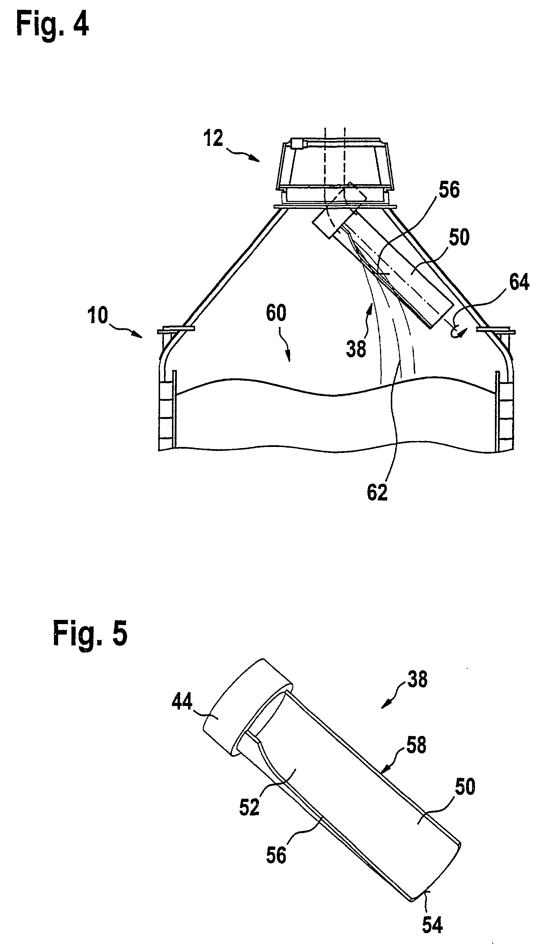

Referring now simultaneously to FIG. 1 and FIG. 5, it will be noted that the chute 38 defines for the bulk material a channel 50 with a concave, cylindrical sliding surface 52 sloping downwards from the top end to the bottom end of the chute 38. The material feed tube 46 conveys the bulk material onto the sliding surface 52 in the tubular top end 44 of the chute 38. At the bottom end of the chute, the sliding surface 52 is delimited by a front edge 54. To its left side, the sliding surface 52 is delimited by a first lateral edge 56, and to its right side, by a second lateral edge 58. It will be noted that the first lateral edge 56 is designed so that the width of the concavely curved sliding surface 52 gradually diminishes from the top end to the bottom end of the chute 38.

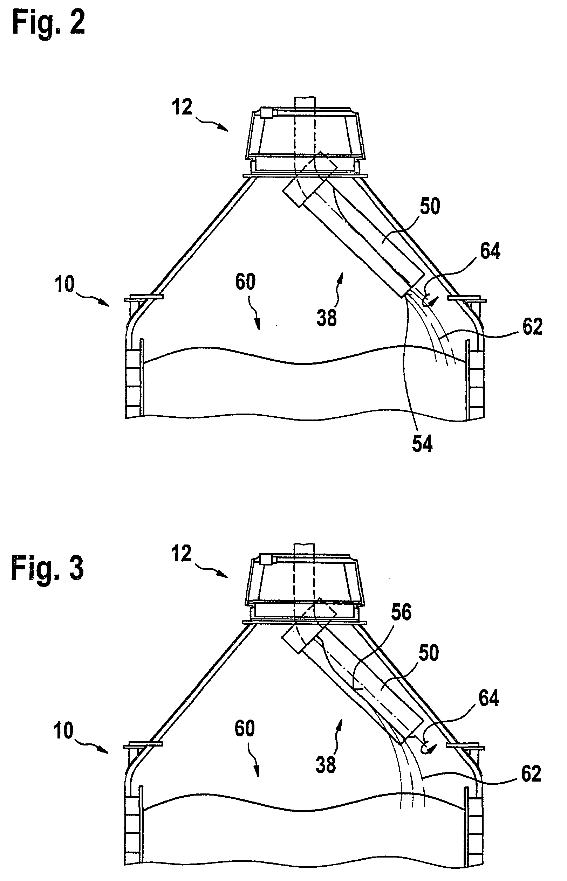

Referring now simultaneously to FIG. 2, FIG. 3 and FIG. 4, in which reference number 60 refers to a charging surface in the shaft furnace 10, the operation of the charging apparatus 12 will be readily understood. If the chute is in the position shown in FIG. 2, bulk material 62 sliding down the chute channel 50 leaves the latter at the bottom end of the chute 38, where it flows over the front edge 54 to fall onto the outer region of the charging surface 60. The chute 38 is now rotated about its central axis 40' in the direction of arrow 64 into the position of FIG. 3. If the sliding surface 52 has the angular orientation of FIG. 3, its first lateral edge 56 intersects the flow path of the bulk material sliding down the chute channel 50 near the bottom end of the chute 38. It follows that the bulk material 62 now leaves the chute channel 50 near the bottom end of the chute 38 by sliding over the first lateral edge 56. As a result, the bulk material 62 now falls closer to the centre of the charging surface 60. The chute 38 is then further pivoted about its central axis 40' in the direction of arrow 64 into the angular position of FIG. 4. If the sliding surface 52 has the angular orientation of FIG. 3, its first lateral edge 56 intersects the flow path of the bulk material sliding down the chute channel 50 already very close to the top end of the chute 38. It follows that the bulk material 62 now leaves the chute channel 50 near the top end of the chute 38 by sliding over the first lateral edge 56. As a result, the bulk material 62 now falls close to the centre of the charging surface 60. In FIG. 2, FIG. 3 and FIG. 4 the rotor 22 is always shown in the same position. It will be understood that by rotating the rotor 22 about its axis of rotation 20' and simultaneously varying the angular position of the chute 38 as described hereinbefore, it is possible to distribute bulk material 62 along a substantially spiral path onto the charging surface 60. It will be noted that the angular amplitude of the chute 38 between the end position shown in FIG. 2 and the end position shown in FIG. 4 can be very small (here it is about 90°).

The description of the charging device 12 will now be continued by referring again to FIG. 1. The rotatable support ring 40 of the chute 38 is driven by a second drive 70 mounted on the rotor 22. In the embodiment of FIG. 1, this second drive 70 is an electric or hydraulic rotary drive, which is connected to the rotatable support ring 40 by means of a gear assembly 72 engaging a gear ring 74 on the rotatable support ring 40. An interesting alternative to the gear assembly 72 is e.g. a chain drive. It will further be appreciated that―because of the small angular amplitude of the rotatable support ring 40―it is not excluded to conceive the second drive 70 as an electric or hydraulic linear drive, which is connected to the rotatable support ring 40 e.g. by means of a lever mechanism.

In the embodiment of FIG. 1, power supply equipment for the drive 70 is located on the rotor 22. If the drive 70 is e.g. an hydraulic drive, then reference number 76 represents an hydraulic pump arranged on the rotor 22 and provided with a pinion drive 78. The pinion drive 78 engages with a tooth ring 80 supported by the housing 14, so that the hydraulic pump 76 is driven by the tooth ring 80 when the rotor 22 is rotated about its vertical axis of rotation 20'. The pressure produced by the hydraulic pump 76 is accumulated in an hydraulic accumulator 82 arranged on the rotor 22. An hydraulic control circuit 84, which is connected between the hydraulic accumulator 82 and the hydraulic drive 70, allows to control the rotation of the chute 38 in function of control signals received from a central control unit (not shown). If the drive 70 is however an electric drive, then reference number 76 represents an electric generator arranged on the rotor 22 and provided with a pinion drive 78. The pinion drive 78 engages with the tooth ring 80 supported by the housing 14, so that the electric generator 76 is driven by the tooth ring 80 when the rotor 22 is rotated about its vertical axis of rotation 20'. The electric energy produced by the generator 76 is accumulated in an electric accumulator 82 arranged on the rotor 22. An electric control circuit 84, which is connected between the accumulator 82 and the electric drive 70, allows to control the rotation of the chute 38 in function of control signals received from a central control unit (not shown). It will be appreciated that these "power-supply-on-the-rotor" solutions have the advantage not to require a rotating power transfer system, such as e.g. electric slip ring contacts or rotating hydraulic connections, to connect the drive 70 to a stationary power supply.

A further advantage of the charging device 12 is the fact that the chute 38 can be easily mounted and dismounted. Referring again to FIG. 1, it will be noted that the tubular top end 44 of the chute 38 is in fact designed as a cylindrical tube that is axially inserted into a cylindrical opening of the rotatable support ring 40. Complementary bayonet connection means 90 are associated with the tubular top end 40 and the rotatable support ring 40 for axially supporting the tubular top end 44 of the chute 38 in the rotatable support ring 40. It follows that the chute 38 can be easily fixed (or unfixed) in its support ring 40 by rotating the rotatable support ring 40 about its central axis 42, while simultaneously blocking the chute 38 in rotation about its longitudinal axis 42'. Additional wedges or bolts (not shown) will normally be used to secure the bayonet type connection, thus avoiding its loosening when the chute 38 is rotated about its longitudinal axis 42 during operation of the charging device.

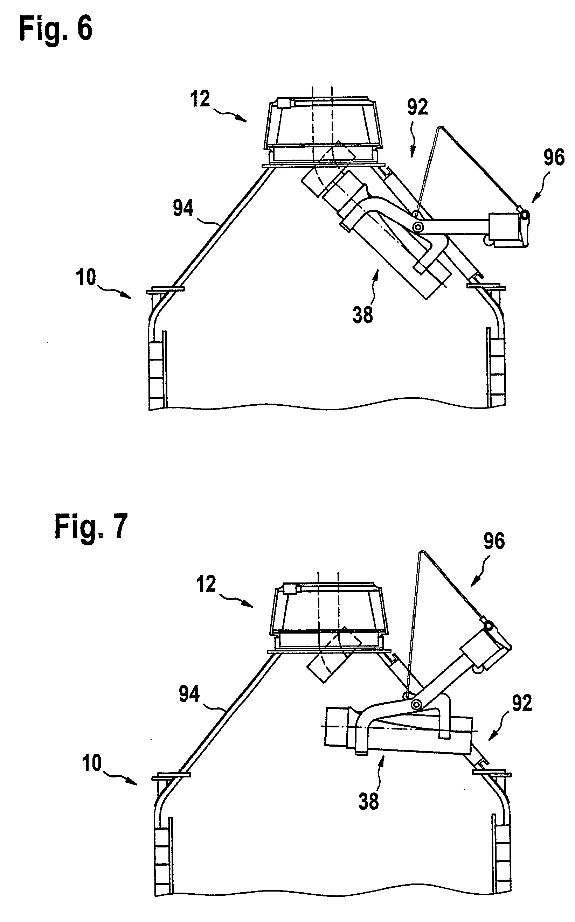

FIG. 6 and FIG. 7 illustrate the dismounting, respectively mounting, of the chute 38 through a maintenance opening 92 in a dome 94 at the top end of the shaft furnace 10 by means of a special chute manipulator 96. It will be noted that this chute manipulator 96 is also capable of blocking the chute 38 in rotation about its longitudinal axis 42' when the bayonet connection means 90 are to be locked or unlocked by rotating the rotatable support ring 40 about its central axis 42.

## Claims

1. A charging device for bulk material comprising:
a support structure (14);
a rotor (22) supported by said support structure (14) so as to have a substantially vertical axis of rotation (20');
a first drive (32) for rotating said rotor (22) about its substantially vertical axis of rotation (20'); and
a chute (38) supported by said rotor (22) so as to be rotated with the latter, said chute having a top end and a bottom end and defining for said bulk material a channel (50) with a concavely curved substantially cylindrical sliding surface (52) sloping downwards from said top end to said bottom end of the chute (38);
said chute (38) is supported by said rotor (22) so as to be capable of rotating about its longitudinal axis (42') between a first angular end position and a second angular end position; and
said sliding surface (52) is designed so that it is possible to vary the location where bulk material sliding down the chute channel (50) leaves the latter by rotating the chute (38) about its longitudinal axis (42');
**characterized in that**
said sliding surface (52) has a front end edge (54) delimiting said sliding surface (52) at said bottom end of the chute (38) and a first lateral edge (56) delimiting said sliding surface (52) along one side from said bottom end to said top end of the chute (38), wherein said first lateral edge (56) is designed so that:
if said chute (38) is in said first angular end position, then bulk material sliding down said chute channel (50) leaves the latter over said front end edge (54); and
if said chute (38) is in said second angular end position, then bulk material sliding down said chute channel (50) leaves the latter over said first lateral edge(56), near said top end of the chute (38).

2. The charging device as claimed in claim 1, wherein:
the amplitude of rotation between said first angular end position and said second angular end position of said chute is less than 180°.

3. The charging device as claimed in claim 1 or 2, wherein:
said rotor (22) comprises a rotatable support ring (40) with an axis of rotation (42) that defines an acute angle (α) with the vertical axis of rotation (42') of the rotor (22); and
said chute (38) has a tubular top end (44) that is axially inserted into said rotatable support ring (40) and secured thereto, wherein said longitudinal axis (42') of the chute (38) is substantially coaxial with said axis of rotation (42) of the rotatable support ring (40).

4. The charging device as claimed in claim 3, wherein:
said tubular top end (44) of the chute (38) is designed as a cylindrical tube that is axially inserted into a cylindrical opening of said rotatable support ring (40); and
complementary bayonet connection means (90) are associated with said tubular top end (44) and said rotatable support ring (40) for axially supporting said tubular top end (44) of the chute (38) in said rotatable support ring (40).

5. The charging device as claimed in any one of daims 1 to 4, comprising a second drive (70) mounted on said rotor (22) for rotating said chute (38) about its longitudinal axis (42').

6. The charging device as claimed in claim 5, wherein said second drive (70) is an hydraulic drive and said charging device further comprises a rotating hydraulic connection for connecting said hydraulic drive on said rotor (22) to a stationary hydraulic circuit on said support structure (14).

7. The charging device as claimed in claim 6, wherein said second drive (70) is an hydraulic drive and said charging device further comprises:
an hydraulic pump (76) arranged on said rotor (22), said hydraulic pump (76) comprising a pinion drive (78);
a tooth ring (80) fixed to said support structure (14), said pinion drive (78) engaging with said tooth ring (80) and being driven by the latter when said rotor (22) is rotated about said vertical axis of rotation;
an hydraulic accumulator (82) arranged on said rotor (22) and connected to said hydraulic pump (76); and
an hydraulic control circuit (84) connected between said hydraulic accumulator (82) and said hydraulic drive (70).

8. The charging device as claimed in claim 5, wherein said second drive (70) is an electric drive and said charging device further comprises slip ring contacts for connecting said electric drive to a stationary electric circuit.

9. The charging device as claimed in claim 5, wherein said second drive (70) is an electric drive and said charging device further comprises:
an electric energy generator (76) arranged on said rotor (22), said electric energy generator (76) comprising a pinion drive (78);
a tooth ring (80) fixed to said support structure (14), said pinion drive (78) engaging said tooth ring (80) and being driven by the latter when said rotor (22) is rotated about said vertical axis of rotation (20');
an electric energy accumulator (82) arranged on said rotor (22) and connected to said electric energy generator (76); and
an electric control circuit (84) connected between said electric energy accumulator (82) and said electric drive.

10. The charging device as claimed in any one of claims 1 to 4, further comprising:
a second drive mounted on said support structure;
an auxiliary rotor having a substantially vertical axis of rotation, said auxiliary rotor being driven by said second drive; and
a mechanism connected between said auxiliary rotor and said chute (38), so that an angular shift between said auxiliary rotor and said rotor (22) supporting said chute (38) is transformed in a rotation of said chute (38) about its longitudinal axis (42').

11. The charging device as claimed in any one of claims 1 to 10, wherein:
said rotor (22) includes a vertical material feed tube (46) in rotation with said rotor (22); and
said material feed tube (46) includes a top end for receiving said bulk material and a bottom end engaging said top end of the chute (38) for conducting said bulk material onto said concavely curved sliding surface (52) on said top end of the chute (38).

12. The charging device as claimed in claim 11, wherein:
said support structure (14) forms a housing including a top end with an top opening (18) therein and a bottom end with an bottom opening therein;
said vertical material feed tube (46), is located axially below said top opening (18) in said housing (14); and
said rotor (22) closes said open bottom opening of said housing (14) with the exception of a small annular gap (47) between said rotor (22) and said housing.

## Revendications

1. Dispositif de chargement de matériau en vrac, comprenant :
une structure de support (14);
un rotor (22) supporté par ladite structure de support (14) de façon à avoir un axe de rotation substantiellement vertical (20');
un premier mécanisme d'entraînement (32) pour faire tourner ledit rotor (22) autour de son axe de rotation substantiellement vertical (20'); et
une goulotte (38) supportée par ledit rotor (22) de façon à être tournée par ce dernier, ladite goulotte comportant une extrémité supérieure et une extrémité inférieure et définissant, pour ledit matériau en vrac, un canal (50) présentant une surface de glissement substantiellement cylindrique et incurvée de façon concave (52) inclinée vers le bas de ladite extrémité supérieure à ladite extrémité inférieure de la goulotte (38);
ladite goulotte (38) est supportée par ledit rotor (22) de façon à pouvoir tourner autour de son axe longitudinal (42') entre une première position d'extrémité angulaire et une deuxième position d'extrémité angulaire; et
ladite surface de glissement (52) est conçue de sorte qu'il est possible de varier l'emplacement où le matériau en vrac glissant le long du canal de goulotte (50) quitte ce dernier en faisant tourner la goulotte (38) autour de son axe longitudinal (42');
**caractérisé en ce que**
ladite surface de glissement (52) possède un bord d'extrémité avant (54) délimitant ladite surface de glissement (52) à ladite extrémité inférieure de la goulotte (38) et un premier bord latéral (56) délimitant ladite surface de glissement (52) le long d'un côté depuis ladite extrémité inférieure à ladite extrémité supérieure de la goulotte (38), où ledit premier bord latéral (56) est conçu de sorte que :
si ladite goulotte (38) est dans ladite première position d'extrémité angulaire, le matériau en vrac glissant le long dudit canal de goulotte (50) quitte ce dernier par-dessus ledit bord d'extrémité avant (54); et
si ladite goulotte (38) est dans ladite deuxième position d'extrémité angulaire, le matériau en vrac glissant le long dudit canal de goulotte (50) quitte ce dernier par-dessus ledit premier bord latéral (56), près de ladite extrémité supérieure de la goulotte (38).

2. Dispositif de chargement selon la revendication 1, dans lequel :
l'amplitude de rotation entre ladite première position d'extrémité angulaire et ladite deuxième position d'extrémité angulaire de ladite goulotte est inférieure à 180°.

3. Dispositif de chargement selon la revendication 1 ou 2, dans lequel :
ledit rotor 22 comprend une bague de support mobile en rotation (40) avec un axe de rotation (42) qui définit un angle aigu (α) avec l'axe de rotation vertical (42') du rotor (22); et
ladite goulotte (38) possède une extrémité supérieure tubulaire (44) qui est insérée axialement dans ladite bague de support mobile en rotation (40) et est fixée à celle-ci, où ledit axe longitudinal (42') de la goulotte (38) est substantiellement coaxial avec ledit axe de rotation (42) de la bague de support mobile en rotation (40).

4. Dispositif de chargement selon la revendication 3, dans lequel :
ladite extrémité supérieure tubulaire (44) de la goulotte (38) est conçue comme un tube cylindrique qui est inséré axialement dans une ouverture cylindrique de ladite bague de support mobile en rotation (40); et
des moyens complémentaires de raccordement à baïonnette (90) sont associés à ladite extrémité supérieure tubulaire (44) et à ladite bague de support mobile en rotation (40) pour supporter axialement ladite extrémité supérieure tubulaire (44) de la goulotte (38) dans ladite bague de support mobile en rotation (40).

5. Dispositif de chargement selon l'une quelconque des revendications 1 à 4, comprenant un mécanisme d'entraînement (70) monté sur ledit rotor (22) pour faire tourner ladite goulotte (38) autour de son axe longitudinal (42').

6. Dispositif de chargement selon la revendication 5, dans lequel ledit deuxième mécanisme d'entraînement (70) est un mécanisme d'entraînement hydraulique et ledit dispositif de chargement comprend en outre un raccord hydraulique rotatif pour raccorder ledit mécanisme d'entraînement hydraulique sur ledit rotor (22) à un circuit hydraulique immobile sur ladite structure de support (14).

7. Dispositif de chargement selon la revendication 6, dans lequel ledit deuxième mécanisme d'entraînement (70) est un mécanisme d'entraînement hydraulique et ledit dispositif de chargement comprend en outre :
une pompe hydraulique (76) disposée sur ledit rotor (22), ladite pompe hydraulique (76) comprenant un mécanisme d'entraînement à pignon (78);
une couronne dentée (80) fixée à ladite structure de support (14), ledit mécanisme d'entraînement à pignon (78) étant en prise avec ladite couronne dentée (80) et étant entraîné par cette dernière lorsque ledit rotor (22) est mis en rotation autour dudit axe de rotation vertical;
un accumulateur hydraulique (82) disposé sur ledit rotor (22) et raccordé à ladite pompe hydraulique (76); et
un circuit de commande hydraulique (84) relié entre ledit accumulateur hydraulique (82) et ledit mécanisme d'entraînement hydraulique (70).

8. Dispositif de chargement selon la revendication 5, dans lequel ledit deuxième mécanisme d'entraînement (70) est un mécanisme d'entraînement électrique et ledit dispositif de chargement comprend en outre des contacts à bague collectrice pour relier ledit mécanisme d'entraînement électrique à un circuit électrique immobile.

9. Dispositif de chargement selon la revendication 5, dans lequel ledit deuxième mécanisme d'entraînement (70) est un mécanisme d'entraînement électrique et ledit dispositif de chargement comprend en outre :
un générateur d'énergie électrique (76) disposé sur ledit rotor (22), ledit générateur d'énergie électrique (76) comprenant un mécanisme d'entraînement à pignon (78);
une couronne dentée (80) fixée à ladite structure de support (14), ledit mécanisme d'entraînement à pignon (78) étant en prise avec ladite couronne dentée (80) et étant entraîné par cette dernière lorsque ledit rotor (22) est mis en rotation autour dudit axe de rotation vertical (20');
un accumulateur d'énergie électrique (82) disposé sur ledit rotor (22) et raccordé audit générateur d'énergie électrique (76); et
un circuit de commande électrique (84) relié entre ledit accumulateur d'énergie électrique (82) et ledit mécanisme d'entraînement électrique.

10. Dispositif de chargement selon l'une quelconque des revendications 1 à 4, comprenant en outre :
un deuxième mécanisme d'entraînement monté sur ladite structure de support;
un rotor auxiliaire ayant un axe de rotation substantiellement vertical, ledit rotor auxiliaire étant entraîné par ledit mécanisme d'entraînement; et
un mécanisme relié entre ledit rotor auxiliaire et ladite goulotte (38), de sorte qu'un décalage angulaire entre ledit rotor auxiliaire et ledit rotor (22) supportant ladite goulotte (38) est transformé en une rotation de ladite goulotte (38) autour de son axe longitudinal (42').

11. Dispositif de chargement selon l'une quelconque des revendications 1 à 10, dans lequel :
ledit rotor (22) comprend un tube vertical d'alimentation en matériau (46) en rotation avec ledit rotor (22); et
ledit tube d'alimentation en matériau (46) comprend une extrémité supérieure pour recevoir ledit matériau en vrac et une extrémité inférieure en prise avec ladite extrémité supérieure de la goulotte (38) pour acheminer ledit matériau en vrac sur ladite surface de glissement incurvée de manière concave (52) sur ladite extrémité supérieure de la goulotte (38).

12. Dispositif de chargement selon la revendication 11, dans lequel:
ladite structure de support (14) forme un boîtier comprenant une extrémité supérieure dans laquelle se trouve une ouverture supérieure (18) et une extrémité inférieure dans laquelle se trouve une ouverture inférieure;
ledit tube vertical d'alimentation en matériau (46) est positionné axialement au-dessous de ladite ouverture supérieure (18) dans ledit boîtier (14); et
ledit rotor (22) ferme ladite ouverture inférieure ouverte dudit boîtier (14) à l'exception d'un petit écartement annulaire (47) entre ledit rotor (22) et ledit boîtier.

## Patentansprüche

1. Beschickungsvorrichtung für Schüttgut, umfassend:
eine Tragekonstruktion (14):
einen Rotor (22), der durch die Tragekonstruktion (14) getragen wird, um so eine im Wesentlichen vertikale Drehachse (20') aufzuweisen;
einen ersten Antrieb (32), um den Rotor (22) um dessen im Wesentlichen vertikale Drehachse (20') zu drehen; und
eine Schurre (38), die durch den Rotor (22) getragen wird, um so mit Letzterem gedreht zu werden, wobei die Schurre ein oberes Ende und ein unteres Ende aufweist und für das Schüttgut eine Rinne (50) mit einer konkav gekrümmten, im Wesentlichen zylindrischen Gleitfläche (52) definiert, die vom oberen Ende zum unteren Ende der Schurre (38) hin abwärts geneigt ist;
wobei die Schurre (38) durch den Rotor (22) getragen wird, um so um ihre Längsachse (42') zwischen einer ersten Winkelendposition und einer zweiten Winkelendposition gedreht werden zu können; und
wobei die Gleitfläche (52) so konstruiert ist, dass die Position verändert werden kann, wo das Schüttgut, das die Schurrenrinne (50) hinuntergleitet, Letztere durch Drehen der Schurre (38) um deren Längsachse (42') verlässt;
**dadurch gekennzeichnet, dass**
die Gleitfläche (52) eine Vorderendkante (54), die die Gleitfläche (52) am unteren Ende der Schurre (38) begrenzt, und eine erste Seitenkante (56) aufweist, die die Gleitfläche (52) entlang einer Seite vom unteren Ende zum oberen Ende der Schurre (38) hin begrenzt, wobei die erste Seitenkante (56) so konstruiert ist, dass:
wenn die Schurre (38) in ihrer ersten Winkelendposition ist, dann das Schüttgut, das die Schurrenrinne (50) hinuntergleitet, Letztere über die Vorderendkante (54) verlässt; und
wenn die Schurre (38) in ihrer zweiten Winkelendposition ist, dann das Schüttgut, das die Schurrenrinne (50) hinuntergleitet, Letztere über die erste Seitenkante (56) nahe dem oberen Ende der schurre (38) verlässt.

2. Beschickungsvorrichtung nach Anspruch 1, wobei:
die Amplitude der Drehung zwischen der ersten Winkelendposition und der zweiten Winkelendposition der Schurre unter 180° beträgt.

3. Beschickungsvorrichtung nach Anspruch 1 oder 2, wobei:
der Rotor (22) einen drehbaren Tragering (40) mit einer Drehachse (42) umfasst, die einen spitzen Winkel (α) mit der vertikalen Drehachse (42') des Rotors (22) definiert; und
die Schurre (38) ein rohrförmiges oberes Ende (44) aufweist, das axial in den drehbaren Tragering (40) eingesetzt und daran befestigt ist, wobei die Längsachse (42') der Schurre (38) im Wesentlichen mit der Drehachse (42) des drehbaren Tragerings (40) gleichachsig ist.

4. Beschickungsvorrichtung nach Anspruch 3, wobei:
das rohrförmige obere Ende (44) der Schurre (38) als ein zylindrisches Rohr konstruiert ist, das axial in eine zylindrische Öffnung des drehbaren Tragerings (40) eingesetzt ist; und
komplementäre Bajonett-Verbindungsmittel (90) dem rohrförmigen oberen Ende (44) und dem drehbaren Tragering (40) zugeordnet sind, um das rohrförmige obere Ende (44) der Schurre (38) axial im drehbaren Tragering (40) zu haltern.

5. Beschickungsvorrichtung nach irgendeinem der Ansprüche 1 bis 4, umfassend einen am Rotor (22) befestigten zweiten Antrieb (70), um die Schurre (38) um ihre Längsachse (42') zu drehen.

6. Beschickungsvorrichtung nach Anspruch 5, wobei der zweite Antrieb (70) ein hydraulischer Antrieb ist und die Beschickungsvorrichtung ferner einen drehbaren Hydraulikanschluss umfasst, um den hydraulischen Antrieb am Rotor (22) an einen ortsfesten Hydraulikkreis an der Tragekonstruktion (14) anzuschließen.

7. Beschickungsvorrichtung nach Anspruch 6, wobei der zweite Antrieb (70) ein hydraulischer Antrieb ist und die Beschickungsvorrichtung ferner umfasst:
eine Hydraulikpumpe (76), die am Rotor (22) angeordnet ist, wobei die Hydraulikpumpe (76) einen Ritzelantrieb (78) umfasst;
einen Zahnkranz (80), der an der Tragekonstruktion (14) befestigt ist, wobei der Ritzelantrieb (78) in Eingriff mit dem Zahnkranz (80) steht und durch Letzteren angetrieben wird, wenn der Rotor (22) um die vertikale Drehachse gedreht wird;
einen Hydraulikspeicher (82), der am Rotor (22) angeordnet und an die Hydraulikpumpe (76) angeschlossen ist; und
einen hydraulischen Regelkreis (84), der zwischen dem Hydraulikspeicher (82) und dem hydraulischen Antrieb (70) angeschlossen ist.

8. Beschickungsvorrichtung nach Anspruch 5, wobei der zweite Antrieb (70) ein elektrischer Antrieb ist und die Beschickungsvorrichtung ferner Schleifringkontakte umfasst, um den elektrischen Antrieb mit einem ortsfesten Stromkreis zu verbinden.

9. Beschickungsvorrichtung nach Anspruch 5, wobei der zweite Antrieb (70) ein elektrischer Antrieb ist und die Beschickungsvorrichtung ferner umfasst:
einen Stromgenerator (76), der am Rotor (22) angeordnet ist, wobei der Stromgenerator (76) einen Ritzelantrieb (78) umfasst;
einen Zahnkranz (80), der an der Tragekonstruktion (14) befestigt ist, wobei der Ritzelantrieb (78) in Eingriff mit dem Zahnkranz (80) steht und durch Letzteren angetrieben wird, wenn der Rotor (22) um die vertikale Drehachse (20') gedreht wird;
einen Stromspeicher (82), der am Rotor (22) angeordnet und an den Stromgenerator (76) angeschlossen ist; und
einen elektrischen Regelkreis (84), der zwischen dem Stromgenerator (82) und dem elektrischen Antrieb angeschlossen ist.

10. Beschickungsvorrichtung nach irgendeinem der Ansprüche 1 bis 4, ferner umfassend:
einen zweiten Antrieb, der an der Tragekonstruktion befestigt ist;
einen Zusatzrotor mit einer im Wesentlichen vertikalen Drehachse, wobei der Zusatzrotor durch den zweiten Antrieb angetrieben wird; und
einen Mechanismus, der so zwischen dem Zusatzrotor und der Schurre (38) angeschlossen ist, dass eine Winkelverschiebung zwischen dem Zusatzrotor und dem die Schurre (38) tragenden Rotor (22) in eine Drehung der Schurre (38) um deren Längsachse (42') umgewandelt wird.

11. Beschickungsvorrichtung nach irgendeinem der Ansprüche 1 bis 10, wobei:
der Rotor (22) ein vertikales Material-Beschickungsrohr (46) umfasst, das sich mit dem Rotor (22) dreht; und
das Material-Beschickungsrohr (46) ein oberes Ende zur Aufnahme des Schüttguts und ein mit dem oberen Ende der Schurre (38) in Eingriff stehendes unteres Ende umfasst, um das Schüttgut auf die konkav gekrümmte Gleitfläche (52) am oberen Ende der Schurre (38) zu lenken.

12. Beschickungsvorrichtung nach Anspruch 11, wobei:
die Tragekonstruktion (14) ein Gehäuse ausbildet, das ein oberes Ende mit einer oberen Öffnung (18) darin und ein unteres Ende mit einer unteren Öffnung darin umfasst;
das vertikale Material-Beschickungsrohr (46) axial unter der oberen Öffnung (18) im Gehäuse (14) angeordnet ist; und
der Rotor (22) die offene untere Öffnung des Gehäuses (14) mit Ausnahme eines kleinen ringförmigen Zwischenraums (47) zwischen dem Rotor (22) und dem Gehäuse verschließt.
